# EUROPÄISCHE PATENTSCHRIFT

(11) **EP 2 780 144 B1**
(45) Veröffentlichungstag und Bekanntmachung des Hinweises auf die Patenterteilung: **25.03.2015**
(21) Anmeldenummer: 13826843.8
(22) Anmeldetag: 12.12.2013
(51) Int. Cl.: B29C 45/00, B29C 45/42, B29L 11/00

(54) **KOMBINIERTES SPRITZGÜTERENTNAHME- UND MONTAGEVERFAHREN SOWIE VORRICHTUNG**
COMBINED PROCESS AND APPARATUS FOR REMOVING AND ASSEMBLING OF INJECTION MOULDED PARTS
PROCÉDÉ ET DISPOSITIF POUR LE PRÉLÉVEMENT ET L'ASSEMBLAGE DE PIECES PRODUIT PAR INJECTION

(30) Priorität: 05.02.2013 DE 102013101112
(43) Veröffentlichungstag der Anmeldung: 24.09.2014
(73) Patentinhaber: Waldorf Technik GmbH & Co. KG, 78234 Engen (DE)
(72) Erfinder: CZIZEGG, Wolfgang, 78256 Steisslingen (DE); FUHRMANN, Ralf, 78234 Engen (DE)
(74) Vertreter: Wagner, Kilian
(86) Internationale Anmeldenummer: PCT/EP2013/076453
(87) Internationale Veröffentlichungsnummer: WO 2014/121868

(56) Entgegenhaltungen:
- EP-A2- 0 183 324
- JP-A- H09 123 232
- US-A1- 2004 115 302

## Beschreibung

Die Erfindung betrifft ein kombiniertes Spritzgüterentnahme- und Montageverfahren, insbesondere zur Entnahme von Kontaktlinsenteilformen (Gießteilformen) (aus Kavitäten einer Spritzgussvorrichtung) und Montage Spritzgusspaaren aus jeweils zwei Spritzgussteilen gemäß Anspruch 1. Ferner betrifft die Erfindung eine Vorrichtung zur kombinierten Spritzgüterentnahme und -Montage, insbesondere zur Durchführung des erfindungsgemäßen Verfahrens, gemäß Anspruch 8.

Formen zur Kontaktlinsenherstellung (Kontaktlinsenformen) bestehen aus einem Unterteil und einem Oberteil, die nach der Herstellung der Teilformen im Kunststoffspritzgussverfahren aufeinander gesetzt werden. In diese Kontaktlinsenformen wird in einem späteren Herstellungsschritt zur Herstellung der Kontaktlinsen ein flüssiges Kunststoffsubstrat eingefüllt und, beispielsweise durch UV-Bestrahlen ausgehärtet.

Die Entnahme der Kontaklinsenteilformen und die Montage von Kontaktlinsenformen aus zwei solcher Kontaktlinsenteilformen (Oberteil und Unterteil) ist sehr zeitkritisch für den Spritzgussvorgang, so dass es darauf ankommt, Entnahme und Montage mit möglichst hoher Taktzahl zu realisieren. Darüber hinaus bestehen Bestrebungen, die Rückverfolgbarkeit über den gesamten Herstellungsprozess der Kontaktlinsen zu gewährleisten, derart, dass zu jedem Zeitpunkt eine Aussage getroffen werden kann, aus welcher Kavität, welche Kontaktlinsenteilform stammt, um bei möglichen Produktionsmängeln entweder die Teilformen aus der entsprechenden Kapazität aussortieren zu können und/oder um möglichst schnell an der entsprechenden Kavität Maßnahmen zu ergreifen.

Bei der Kontaktlinsenteilformherstellung sind die Kavitäten zur Herstellung der Teilformen im Regelfall kreisförmig angeordnet, um eine gleichmäßige Verteilung des geschmolzenen Kunststoffes und damit ein gutes Spritzgussergebnis sicherzustellen, wobei im Regelfall die kreisförmigen Kavitätenanordnungen zur Herstellung von Oberteilen und Unterteilen nebeneinander angeordnet sind.

Aus der US 2004/115302 A1 und der JP H09 123232 A ist ganz generell die gleichzeitige Entnahme bzw. das Zusammenführen mehrerer Formteile bekannt.

Die EP 0183324 A2 beschreibt speziell die Entnahme von Kontaktlinsenteilformen und die Montage von Kontaktlinsenformen aus zwei solcher Kontaktlinsenteilformen, wobei diese Verfahrensschritte zeitkritisch für den Spritzgussvorgang sind, sodass es darauf ankommt, Entnahme und Montage mit möglichst hoher Taktzahl zu realisieren.

Ausgehend von dem vorstehend erläuterten Stand der Technik liegt der Erfindung die Aufgabe zugrunde, ein Verfahren und eine, bevorzugt bauraum optimierte, Vorrichtung zur kombinierten Spritzgüterentnahme und - Montage anzugeben, insbesondere zur Entnahme von Kontaktlinsenteilformen und Montage von Kontaktlinsenformen aus jeweils zwei der Kontaktlinsenteilformen, wobei die Entnahme und die Montage, insbesondere ein Aufeinandersetzen von Teilformen, mit hoher Taktzahl möglich sein soll und gleichzeitig sichergestellt ist, dass auch nach der Montage eines resultierenden Spritzgusspaares eine definierte Zuordnung der montierten Spritzgussteile zu den Kavitäten einer Spritzgussvorrichtung möglich ist.

Diese Aufgabe wird mit einem Verfahren mit den Merkmalen des Anspruchs 1 bzw. mittels einer Vorrichtung mit den Merkmalen des Anspruchs 8 gelöst. Kern der Vorrichtung ist unter anderem eine Linearisiervorrichtung mit den Merkmalen des Anspruchs 14.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Das erfindungsgemäße Verfahren und die erfindungsgemäße Vorrichtung setzen an bei einer Spritzgussvorrichtung, bei der die Kavitäten für die ersten Spritzgussteile (insbesondere untere Kontaktlinsenteilformen) und die zweiten Spritzgussteile (insbesondere obere Kontaktlinsenteilformen) jeweils kreisförmig angeordnet sind, wobei es besonders bevorzugt ist, wenn die kreisförmigen Anordnungen der Kavitäten in der Spritzgussanordnung nebeneinander vorgesehen sind, insbesondere derart, dass die Zentren der vorgenannten kreisförmigen Anordnungen auf einer horizontalen oder vertikalen Linie angeordnet sind. Zur Geschwindigkeitsoptimierung ist nun vorgesehen, dass in einem ersten Verfahrensschritt gleichzeitig die ersten und zweiten Spritzgussteile aus den jeweils kreisförmig angeordneten Kavitäten mittels einer Entnahmeeinrichtung entnommen und an einer Linerarisiereinrichtung übergeben werden, so dass dann die Entnahmeeinrichtung unmittelbar wieder frei ist, um den nächsten Schuss von Spritzgussteilen zu entnehmen. Die Linearisiereinrichtung ist dabei derart ausgebildet, dass nicht auf einmal sämtliche Spritzgussteile von der Entnahmeeinrichtung übernommen werden können, sondern dass die Übernahme in mindestens zwei, vorzugsweise ausschließlich zwei Schritten erfolgt, bei denen jeweils nur ein Teil der ersten und zweiten Spritzgussteile, insbesondere Kontaktlinsenteilformen übergeben werden, wobei dieser Teil teilkreisförmig, insbesondere halbkreisförmig angeordnet ist. Zwischen den, insbesondere einzigen beiden, Übergabeschritten erfolgt durch eine entsprechende Ansteuerung der Entnahmeeinrichtung und/oder der Lineareinrichtung eine Relativbewegung zwischen der Entnahmeeinrichtung und der Linearisiereinrichtung, so dass die in den aufeinander folgenden Schritten übernommenen Spritzgussteile versetzt zueinander und insbesondere nicht mehr kreisförmig angeordnet sind. Bevorzugt sind nach vollständiger Übergabe mehrere teilkreisförmige, insbesondere halbkreisförmige Anordnungen von Spritzgussteilen auf der Linearisiereinrichtung vorgesehen.

Um nun gleichzeitig eine kurze Taktzeit zu gewährleisten und auch die Zuordnung zu den Kavitäten für die weiten Schritte beizubehalten, ist als weiterer erfindungswesentlicher Schritt vorgesehen, dass noch auf der Linearisiereinrichtung eine Linearisierung der Spritzgussteile durch Relativverstellen der Spritzgussteile zueinander auf der Linearisiereinrichtung erfolgt, insbesondere derart, dass die zunächst noch jeweils teilkreisförmig, insbesondere halbkreisförmig angeordneten ersten und zweiten Spritzgussteile jeweils in Reihe ausgerichtet werden, was dadurch bewirkt werden kann, dass mindestens ein Spritzgussteil des jeweiligen ersten und zweiten Teils (erste und zweite Teilgruppe) der Spritzgussteile relativ verstellt wird zu den anderen Spritzgussteilen des Teils der Spritzgussteile, insbesondere durch, bevorzugt translatorisches Verstellen einer entsprechenden Spritzgussaufnahme der Linearisiereinrichtung in eine Anordnungsebene der Spritzgussteile auf der Linearisiereinrichtung. Für den Fall der Übergabe der Spritzgussteile von der Entnahmeeinrichtung auf die Linearisiereinrichtung in mehr als zwei Schritten, resultieren entsprechend dritte, vierte oder fünfte etc. Teile (Teilgruppen) auf der Linearisiereinrichtung. Jedenfalls erfolgt nach der Linearisierung, d.h. nach der Anordnung der Spritzgussteile in Reihen eine Überführung der dann als Reihen angeordneten Spritzgussteile auf den Zwischenspeicher, wobei dies entweder unmittelbar mit der Linearisiereinrichtung realisiert werden kann, oder was bevorzugt ist, durch das Vorsehen einer Überführeinrichtung, die bevorzugt relativ zu der Linearisiereinrichtung und dem Zwischenspeicher verstellbar ist, insbesondere in einer Parallelebene zur Flächenerstreckung des Zwischenspeichers. Bevorzugt ist diese Überführeinrichtung dann derart ausgebildet, dass diese auch Überführhübe senkrecht zur Flächenerstreckung des Zwischenspeichers und zwar unabhängig für die ersten und zweiten Spritzgussteile ausführen kann. Bei Verzicht auf die Überführeinrichtung müsste diese Funktionalität von der Linearisiereinrichtung und/oder vom Zwischenspeicher übernommen werden. Für eine geschwindigkeitsoptimierte Vorgehensweise ist es jedenfalls vorteilhaft die zusätzliche Überführeinrichtung vorzusehen.

Dabei ist es besonders bevorzugt, wenn der erste Teil der ersten Spritzgussteile und der erste Teil der zweiten Spritzgussteile bereits auf der Linearisiereinrichtung in Reihe fluchtend angeordnet sind, ebenso wie der zweite Teil der ersten Spritzgussteile und der zweite Teil der zweiten Spritzgussteile, um danach eine möglichst schnelle Übereinanderanordnung auf dem Zwischenspeicher zu bewerkstelligen.

Unabhängig von der konkreten Ausbildung der Überführmittel werden jedenfalls die ersten und zweiten Spritzgussteile von der Linearisiereinrichtung auf den Zwischenspeicher transferiert und zwar derart, dass zunächst die ersten Spritzgussteile in der reihenförmigen Anordnung abgelegt werden und danach die zweiten Spritzgussteile, insbesondere auf die Position der ersten Spritzgussteile in der Zwischenspeicherebene, was durch eine Relativverstellung zwischen Zwischenspeicher und Linearisiereinrichtung oder Überführeinrichtung realisiert werden kann, wobei es besonders bevorzugt ist, wie später noch erläutert werden wird, wenn diese Relativbewegung vom Zwischenspeicher realisiert wird, der in der Ebene seiner Flächenerstreckung bevorzugt translatorisch verstellbar angeordnet ist. Nach dem Relativverstellen erfolgt dann der zweite Ablagehub (Überführhub) zur Ablage der zweiten Spritzgussteile, insbesondere auf die ersten Spritzgussteile, so dass nach erfolgtem Überführen mindestens zwei, insbesondere zueinander versetze Reihen von Spritzgusspaaren auf dem Zwischenspeicher vorgesehen sind, wobei jedes Spritzgusspaar ein erstes und ein zweites Spritzugssteil umfasst.

Wesentlich ist es nun, dass die vorgenannten Schritte mehrfach wiederholt werden, wobei die ersten Spritzugssteile aus der selben Kavität wiederum zu einer Gruppe, insbesondere in Reihe angeordnet werden - hierdurch resultiert auch eine Gruppenanordnung, insbesondere eine in Reihenanordnung der auf die ersten Spritzgussteile aufgesetzten zweiten Spritzgussteile derselben (zweiten) Kavität. Es ist also nun auf dem Zwischenspeicher ohne weiteres nachvollziehbar, aus welchen beiden Kavitäten die in einer Gruppe, bevorzugt Reihe angeordneten ersten und zweiten zu Spritzgusspaaren angeordneten Spritzgussteile entstammen. Werden nun ausschließlich Spritzgusspaare aus einer der vorgenannten Gruppen, insbesondere Reihen auf jeweils einen Träger, insbesondere ein Transporttray für die weitere Kontaktlinsenherstellung übertragen, ist sichergestellt, dass auf dem Träger nur erste Spritzugssteile aus einer bestimmten Kavität und nur zweite Spritzgussteile aus einer bestimmten Kavität angeordnet sind. Selbstverständlich ist es auch möglich, die Spritzgusspaare auf einem Träger gezielt zu mischen, insbesondere derart, dass der Träger bevorzugt zu gleichen Teilen, aus unterschiedlichen Gruppen, insbesondere Reihen des Zwischenspeichers beladen wird. Auch dann ist noch zu jedem Zeitpunkt nachvollziehbar, welche Spritzgussteile des Trägers aus welcher Kavität entstammen. Für letztgenannte Variante ist es vorteilhaft, dass die anspruchsgemäßen Schritte a bis d solange wiederholt werden, bis die Gruppen (insbesondere Reihen) der Spritzgussteilpaare auf dem Zwischenspeicher jeweils eine Anzahl A von Spritzgusspaaren umfassen, die der Anzahl von in den Träger zu füllenden Spritzgusspaaren oder einem ganzzahligen Teiler von A entspricht, um eine vollständige Auffüllung des Trägers mit Spritzgusspaaren aus ausschließlich einer Gruppe, insbesondere einer Reihe, alternativ eine gleichmäßige Auffüllung mit Spritzgusspaaren unterschiedlicher Gruppen, insbesondere Reihen zu ermöglichen.

An Stelle die Spritzgusspaare mit Spritzgussteilen bestimmter Kavitäten in Reihe anzuordnen, sind auch andere geometrische Anordnungen möglich. Wesentlich ist, dass Gruppen gebildet werden, in denen ausschließlich erste Spritzugssteile einer bestimmten Kavität und ausschließlich zweite Spritzgussteile einer bestimmten (selbstverständlich anderen) Kavität vorgesehen sind.

Ganz besonders bevorzugt ist es, wenn die Linearisiereinrichtung neben der Linearisierungsfunktion zusätzlich auch eine Verschwenkfunktion hat, insbesondere um Spritzgussteile von der Entnahmeinrichtung in einer Vertikalebene übernehmen und in eine Horizontalebene überführen zu können, wobei es noch weiter bevorzugt ist, wenn die Spritzugssteile hierzu nicht einfach nur im 90° umgelegt bzw. verschwenkt werden, sondern auch in der Horizontalebene nochmals um 90° verdreht werden, um eine besonders platzsparende Anordnung der weiteren Herstellungsschritte zu ermöglichen und zwar in einer Linie, die parallel verläuft zu einer translatorischen Öffnungsbewegung der Spritzgussmaschine. Dabei ist es besonders bevorzugt, wenn dieses räumliche Verschwenken nicht in getrennten Schwenkbewegungen erfolgt, sondern in einer gemeinsamen Verschwenkbewegung, was dadurch realisiert werden kann, dass die Schwenkachse der Linearisiereinrichtung sowohl winklig zur Horizontalachse als auch winklig zur Vertikalachse angeordnet ist. Selbstverständlich ist es alternativ möglich, die Entnahmeeinrichtung verschwenkbar anzuordnen, was jedoch in der Gesamtanordnung aufwändiger ist, da in diesem Fall die Entnahmeeinrichtung unter die Linearisiereinrichtung verfahren werden müsste.

Wie eingangs erwähnt ist es grundsätzlich möglich, die Übergabe der Spritzgussteile von der Linearisiereinrichtung auf den Zwischenspeicher durch entsprechendes Verstellen der Linearisiereinrichtung unmittelbar mit dieser auszuführen. Vorteilhaft dabei ist es jedoch, wenn zu diesem Zweck eine Überführeinrichtung vorgesehen ist, die relativ zur Linearisiereinrichtung verstellbar ist, wobei die Überführeinrichtung bevorzugt derart ausgebildet und angeordnet ist, dass diese in einer Parallelebene zur Flächenerstreckung des Zwischenspeichers, insbesondere in einer Horizontalebene, verfahrbar ist. Noch weiter bevorzugt ist es, wenn die Überführeinrichtung derart ausgebildet ist, dass diese getrennte Hübe senkrecht zu dieser Parallelebene für die ersten und zweiten Spritzgussteile ausführen kann, um diese nacheinander, insbesondere aufeinander auf dem Zwischenspeicher abzulegen.

Die Erfindung führt auch auf eine Vorrichtung, insbesondere zur Ausführung eines nach dem Konzept der Erfindung ausgebildeten Verfahrens, wobei die Vorrichtung neben einer Entnahmeeinrichtung zur gleichzeitigen Entnahme der kreisförmig angeordneten ersten Spritzgussteile und der kreisförmig angeordneten zweiten Spritzgussteile einen Zwischenspeicher, eine Steuereinrichtung und eine Linearisiereinrichtung aufweist, so wie der Linearisiereinrichtung und der Entnahmeinrichtung zugeordnete Verstellmittel zur Realisierung einer Relativbewegung zwischen Entnahmeeinrichtung und Linearisiereinrichtung. Ferner umfasst die Vorrichtung Überführmittel zum Überführen der Spritzgussteile von der Linearisiereinrichtung auf den Zwischenspeicher, wobei diese, wie bereits ausführlich erläutert, bevorzugt eine Überführeinrichtung umfassen - alternativ ist die Überführung unmittelbar mit der Linearisiereinrichtung denkbar. Wesentlich ist nun, dass die Steuereinrichtung die einzelnen Komponenten der Vorrichtung derart ansteuert, dass die Vorrichtung das erfindungsgemäße Verfahren ausführt, wobei die Entnahme, Übergabe an die Linearisiereinrichtung, das in Reihe anordnen (Linearisieren) der Spritzgussteile auf die Linearisiereinrichtung und die Übergabe auf den Zwischenspeicher mehrfach wiederholt werden und hierdurch mehrere, vorzugsweise reihenförmige Gruppen von Spritzgusspaaren auf dem Zwischenspeicher gebildet werden, die sich dadurch auszeichnen, dass diese nur erste Spritzgussteile einer bestimmten Kavität und nur zweite Spritzgussteile einer bestimmten (anderen) Kavität beinhalten.

Zur Realisierung der Linearisierung der zunächst noch teilkreisförmig, insbesondere halbkreisförmig angeordneten ersten und zweiten Spritzgussteile auf der Linearisiereinrichtung ist zumindest ein Teil der Aufnahmen für die Spritzgussteile der Linearisiereinrichtung zumindest einer anderen der Aufnahmen verstellbar, insbesondere verschiebbar, um dann im Ergebnis von den teilkreisförmigen Anordnungen zu linienförmigen Anordnungen zu gelangen.

Wie bereits im Zusammenhang mit dem Verfahren im Detail erläutert, ist es besonders zweckmäßig, wenn die Linearisiereinrichtung gleichzeitig als Verschwenkeinrichtung ausgebildet ist, um die Spritzgussteile aus einer vertikalen Anordnung in eine horizontale Flächenanordnung zu überführen, insbesondere derart, dass bezogen auf die ursprüngliche Position nochmals eine 90° Drehung in der Horizontalen resultiert.

Besonders zweckmäßig ist es, wenn der Zwischenspeicher in einer Ebene, insbesondere einer Horizontalebene relativ zu den Überführmitteln, insbesondere einer von der Lineariereinrichtung separaten Überführeinrichtung, noch weiter bevorzugt translatorisch verfahrbar ist, insbesondere parallel zu einer translatorischen Öffnungsrichtung der Teilformen der Spritzgussvorrichtung.

Ganz besonders bevorzugt zeichnen sich die Überführmittel dadurch aus, dass diese relativ zum Zwischenspeicher verstellbar sind, insbesondere translatorisch in einer Parallelebene zur Flächenerstreckung des Zwischenspeichers. Um eine möglichst einfache und schnelle Ablage der ersten und zweiten Spritzgussteile auf den selben Positionen wie die Partner-Ersten-Spritzgussteile abzulegen ist es bevorzugt, wenn die Überführmittel Hubmittel aufweisen, die derart ausgebildet sind, dass die ersten und zweiten Spritzgussteile bzw. deren Aufnahme unabhängig voneinander senkrecht zur Flächenerstreckung des Zwischenspeichers einen Ablagehub ausführen können. Die Erfindung führt auch auf eine besonders ausgestaltete Linearisiervorrichtung in Alleinstellung, wie diese beispielsweise als Teil der erfindungsgemäßen Gesamtvorrichtung eingesetzt werden kann. Diese spezielle Linearisiereinrichtung zeichnet sich dadurch aus, dass diese zum einen um eine Schwenkachse verschwenkbar angeordnet ist und teilkreisförmig, insbesondere halbkreisförmig anordnenbare Aufnahmen zur Aufnahme von ersten und zweiten Spritzgussteilen aufweist, denen, zumindest zum Teil, Verstellmittel zugeordnet sind, um die Aufnahmen relativ zueinander zu verstellen, derart, dass die Aufnahmen nach der Verstellung in Reihen nebeneinander angeordnet sind.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine Anordnung von ersten und zweiten (jeweils kreisförmig angeordneten) Spritzgussteilen in einer Spritzgussanordnung sowie an einer Entnahmeeinrichtung unmittelbar nach der Entnahme,
- Fig. 2: eine Anordnung der ersten und zweiten Spritzgussteile auf eine Linearisiereinrichtung nach einer zweistufigen Übergabe, wobei zwischen den Entnahmeschritten ein Relativbewegungsschritt um die Strecke A erfolgt ist,
- Fig. 3: den Linearisierungsschritt zur Anordnung der ersten und zweiten Spritzgussteile in Reihen auf der Linearisiereinrichtung,
- Fig. 4: eine Anordnung der linearisierten ersten und zweiten Spritzgussteile auf der Linearisiereinrichtung vor und nach einem Verschwenkvorgang um eine schräg im Raum angeordnete Verschwenkachse,
- Fig. 5: die Anordnung der ersten und zweiten Spritzgussteile nach dem Verschwenkschritt,
- Fig. 6: die Anordnung der ersten und zweiten, immer noch in Reihe angeordneten Spritzgussteile auf einer Überführeinrichtung zur Überführung auf einen Zwischenspeicher,
- Fig. 7: einen Zwischenspeicher mit den überführten und zu Paaren angeordneten Spritzgussteilen aus Fig. 5,
- Fig. 8: einen gefüllten Zwischenspeicher nach mehreren, hier beispielhaft sechs Wiederholungen des Entnahme- und Montageverfahrens,
- Fig. 9: eine nest- bzw. kavitätenabhängige Anordnung von Spritzgusspaaren auf einem als Tray ausgebildeten Träger,
- Fig. 10: eine perspektivische Darstellung einer Vorrichtung zur Ausführung eines erfindungsgemäßen Verfahrens,
- Fig. 11: eine Detaildarstellung einer Entnahmeeinrichtung der Vorrichtung,
- Fig. 12: eine Detaildarstellung einer Linearisiereinrichtung,
- Fig. 13: eine Detaildarstellung eines linearverstellbaren Zwischenspeichers, und
- Fig. 14 bis Fig. 16: unterschiedliche Ansichten einer Vorrichtung zur Ausführung des Verfahrens.

In den Figuren sind gleiche Elemente und Elemente mit der gleichen Funktion mit den gleichen Bezugszeichen gekennzeichnet.

In den Zeichnungen sind Richtungspfeile (Achsen) X, Y, Z angegeben, wobei die Pfeilrichtungen X und Z in einer gemeinsamen Ebene, insbesondere in einer Horizontalebene liegen und die Y-Richtung senkrecht hierzu ausgerichtet ist und bevorzugt eine Vertikalrichtung darstellt.

In den Figuren sind bevorzugt als Kontaktlinsenteilformen ausgebildete erste Spritzgussteile mit dem Bezugszeichen UT und zweite, bevorzugt als obere Kontaktlinsenteilformen ausgebildete Spritzgussteile mit dem Bezugszeichen OT gekennzeichnet. Die Angabe Nest 1 bezeichnet ein zweites Spritzgussteil, welches aus einem bestimmten Nest, d.h. einer bestimmten ersten Kavität stammt.

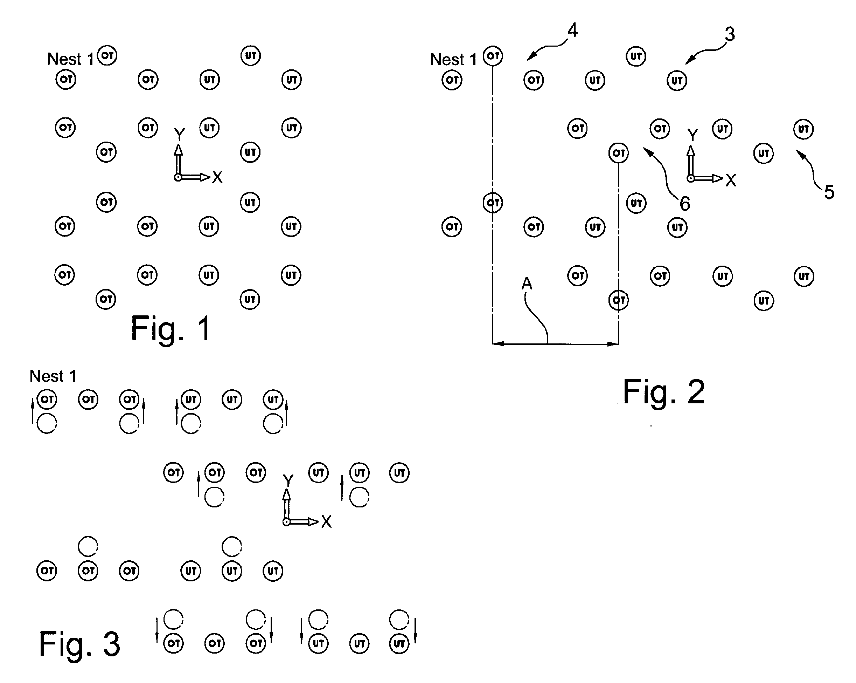

In Fig. 1 ist nun in der oberen Zeichnungshälfte rechts eine kreisförmige Anordnung von K = 6 ersten Spritzgussteilen UT gezeigt, wobei die Anordnung der ersten Spritzgussteile UT der Anordnung der zugehörigen ersten Kavität in einer Spritzgussvorrichtung entspricht.

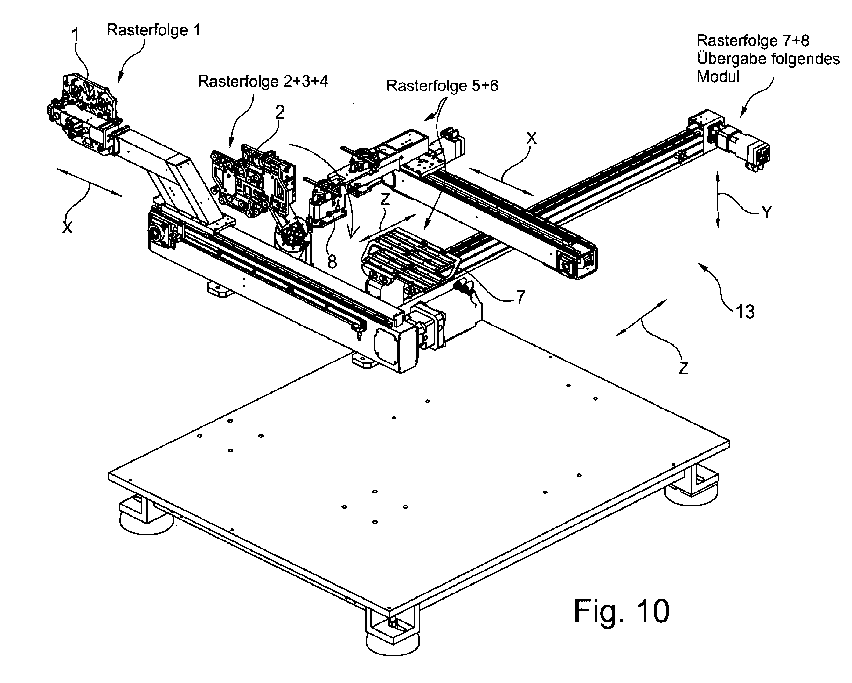

In der Zeichnungsebene links hiervon befindet sich eine Anordnung von K = 6 kreisförmig angeordneten zweiten Spritzgussteilen OT, wobei die Mittelpunkte der kreisförmigen Anordnung auf einer gemeinsamen horizontalen Linie liegen. Auch die Anordnung der zweiten Spritzgussteile OT entspricht der Anordnung der zugehörigen Kavitäten in der Spritzgussmaschine. Aus der Spritzgussmaschine werden die ersten und zweiten Spritzgussteile UT, OT in den gezeigten kreisförmigen Anordnungen mittels einer aus Fig. 10 ersichtlichen Entnahmeeinrichtung 1 entnommen. Die Entnahmeeinrichtung 1 ermöglicht hierzu einen Entnahmehub der zugehörigen Aufnahmen für die Spritzgussteile in einer Z-Richtung.

Wie sich aus Fig. 10 ergibt, kann die Entnahmeeinrichtung neben dem vorerwähnten Z-Hub eine Verstellbewegung entlang der X-Achse vollführen relativ zu einer im Folgenden zu erläuternden Linearisiereinrichtung 2, die in dem gezeigten Ausführungsbeispiel gleichzeitig eine Verschwenkeinrichtung darstellt.

In Fig. 1 ist unterhalb der vorerwähnten Anordnung von ersten und zweiten Spritzgussteilen in der oberen Zeichnungshälfte jeweils nochmals eine Anordnung von ersten und zweiten jeweils kreisförmig angeordneten Spritzgussteilen gezeigt, welche jedoch fakultativ ist. Zur Verminderung der Komplexität werden im Folgenden nur die oberen Anordnungen der ersten und zweiten Spritzgussteile UT, OT und deren weiterer Verlauf bzw. Positionierung erläutert. Mit den unteren Anordnungen wird analog mit denselben Einrichtungen verfahren.

In Fig. 2 ist nun eine Anordnung der ersten und zweiten Spritzgussteile UT, OT nach der vollständigen Übernahme auf die Linearisiereinrichtung 2 gezeigt. Um die gezeigte, versetzte Anordnung zu erhalten, wird zunächst ein erster Teil (Teilgruppe) 3 von halbkreisförmig angeordneten ersten Spritzgussteilen UT und gleichzeitig ein zweiter erster Teil (Teilgruppe) 4 von halbkreisförmig angeordneten zweiten Spritzgussteilen OT auf die Linearisiereinrichtung übergeben.

Danach erfolgt eine Relativbewegung der Entnahmeeinrichtung und der Linearisiereinrichtung, insbesondere durch aktives Verstellen der Entnahmeeinrichtung entlang der X-Achse, und zwar um eine Strecke A, wobei die Strecke A so gewählt ist, dass sämtliche ersten und zweiten Spritzgussteile in der X-Richtung versetzt zueinander angeordnet sind, um somit Platz für den nächsten Verstellschritt zu schaffen. In dem zweiten Übergabeschritt werden nun gleichzeitig ein zweiter Teil 5 der ersten Spritzgussteile und ein zweiter Teil 6 der zweiten Spritzgussteile OT (beide halbkreisförmig angeordnet) übergeben.

Nach diesem vollständigen Übergabeschritt erfolgt ein in Fig. 3 gezeigter Linearisierungsschritt, bei welchem die ersten und zweiten Spritzgussteile UT, OT auf der Linearisiervorrichtung relativ zueinander in der senkrecht zur X-Richtung ausgerichteten Y-Richtung zueinander verstellt werden, so dass die zunächst noch teilkreisförmig, hier beispielhaft jeweils halbkreisförmig angeordneten Teile 3, 4, 5, 6 von Spritzgussteilen UT, OT linearisiert, d.h. in Reihen angeordnet werden. Bevorzugt erfolgt dies durch das Vorsehen entsprechender Schiebefinger, die beispielsweise pneumatisch verstellbar sind, an der Linearisiereinrichtung.

Bevorzugt ist die resultierende Anordnung gemäß Fig. 3 dahingehend, dass der erste Teil 4 der ersten Spritzgussteile UT und der erste Teil 4 der zweiten Spritzgussteile OT miteinander in einer Linie fluchten, die in dem gezeigten Ausführungsbeispiel sich in der X-Richtung erstreckt. Das gleiche gilt für die zweiten Teile 5, 6 der ersten und zweiten Spritzgussteile UT, OT, wobei sämtliche Spritzgussteile UT, OT, d.h. auch die ersten Teile 3, 4 zu den zweiten Teilen 5, 6 entlang der X-Richtung zueinander versetzt sind, so dass diese nicht in der Y-Richtung miteinander fluchten.

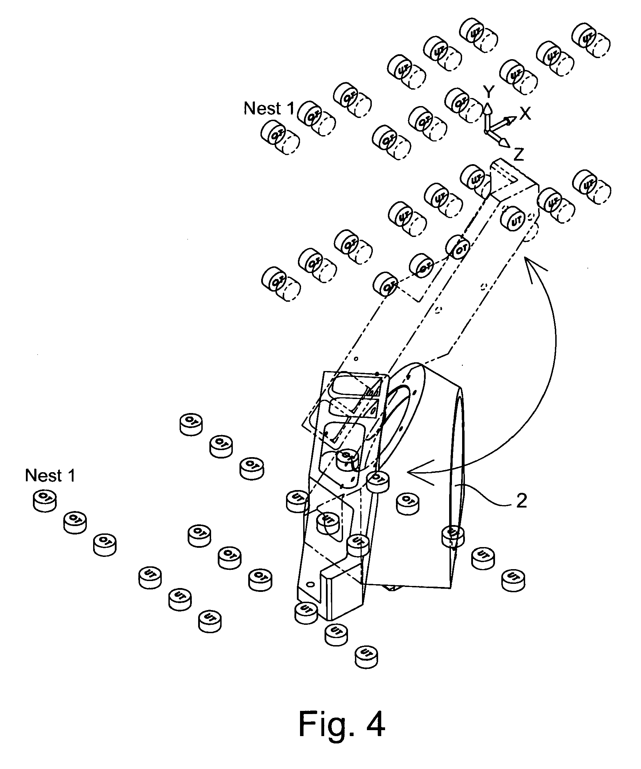

In Fig. 4 ist die beispielhaft und bevorzugt als Schwenkeinrichtung gezeigte Linearisiereinrichtung 2 gezeigt, und zwar in ihren beiden Schwenkpositionen, wobei die in der Zeichnungsebene obere Position der Anordnung gemäß Fig. 3 entspricht. Aus dieser Vertikalposition können die Spritzgussteile in die untere Horizontalposition verschwenkt werden, wobei die Teile hierzu um eine gedachte vertikale und eine gedachte horizontale Schwenkachse verschwenkt werden. In der Praxis geschieht die Verschwenkung durch Verschwenken um eine schräg im Raum angeordnete Verschwenkachse, die sowohl winklig zur Vertikalen als auch zur Horizontalen verläuft. Deutlich wird der Verschwenkschritt aus einem Vergleich der jeweiligen Position des aus dem ersten Nest (erste Kavität) stammenden zweiten Spritzgussteils OT.

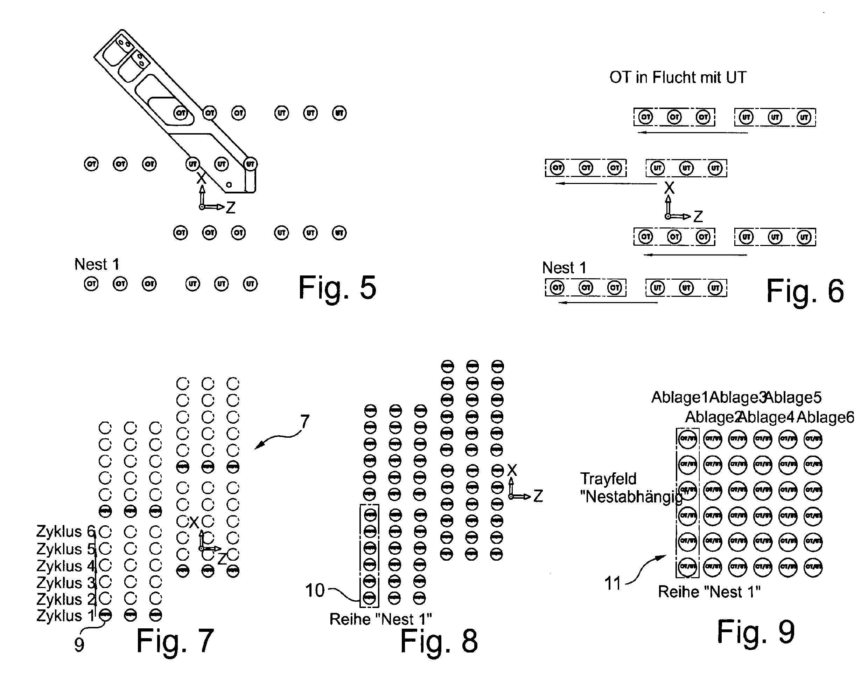

In Fig. 5 ist nun die Darstellung der unteren Verschwenkposition gemäß Fig. 4 wiederholt. Zu erkennen ist die Anordnung der ersten und zweiten Spritzgussteile UT, OT in der in Reihe angeordneten Anordnung in der Horizontalebene X, Z.

In dem nächsten Schritt erfolgt nun die Übergabe auf den in Fig. 7 gezeigten Zwischenspeicher 7 mittels einer in Fig. 10 gezeigten Übergabeeinrichtung 8, wobei die Anordnung der ersten und zweiten Spritzgussteile UT, OT auf dieser Übergabeeinrichtung 8 in Fig. 6 gezeigt ist. Hier ist wieder zu erkennen, dass die ersten Teile 3, 4 der ersten und zweiten Spritzgussteile UT, OT sowie die jeweiligen zweiten Teile 5, 6 in Reihe fluchten, und zwar nun in der Z-Richtung (bedingt durch die Verschwenkung mittels der Linearisiereinrichtung 2).

Es erfolgt nun eine translatorische Bewegung der Übernahmeeinrichtung 8 entlang der X-Achse, um die Teile auf den Zwischenspeicher 7 übergeben zu können.
Dabei werden zunächst die ersten Spritzgussteile durch einen entsprechenden Übergabehub der Überführeinrichtung entlang der Y-Achse übergeben. Daraufhin erfolgt wieder eine Relativverstellung der Überführeinrichtung des Zwischenspeichers durch Verstellen der Überführeinrichtung entlang der X-Achse, woraufhin durch einen zweiten Überführhub der Überführeinrichtung die zweiten Spritzgussteile auf die ersten, bereits auf dem Zwischenspeicher 7 befindlichen Spritzgussteile abgelegt werden. Die Ablage erfolgt so, dass der erste Teil 4 der zweiten Spritzgussteile auf den ersten Teil 3 der ersten Spritzgussteile UT abgelegt werden. Ebenso der zweite Teil 6 auf den ersten Teil 5.

Hieraus resultieren dann nebeneinander angeordnete Spritzgusspaare 9.

Nun werden die zuvor beschriebenen Schritte mehrfach wiederholt, wobei nach jedem Schritt der Zwischenspeicher Z um einen Takt entlang der Z-Achse verstellt wird, damit die in Fig. 8 gezeigten, bevorzugt als Reihen ausgebildeten Gruppen 10 von Spritzgusspaaren entstehen, die sich dadurch auszeichnen, dass diese ausschließlich erste Spritzgussteile aus derselben Kavität und ausschließlich zweite Spritzgussteile aus derselben (anderen) Kavität enthalten, die zu Spritzgusspaaren, jeweils umfassend ein erstes und zweites Spritzgussteil UT, OT umfassen.

In dem gezeigten Ausführungsbeispiel erstrecken sich die reihenförmigen Gruppen 10 entlang der X-Achse, wobei mehrere Reihen nebeneinander entlang der Z-Achse angeordnet sind, sämtliche Sorten bzw. Kavitätenreihen.

Die Gruppen 10 von Spritzgusspaaren können nun, wie in Fig. 9 gezeigt, auf einen Träger 11, insbesondere einen Transportträger angeordnet werden, wobei mehrere, bevorzugt reihenförmige Gruppen 10 nebeneinander angeordnet werden können. Alternativ ist es denkbar die Träger 11 auch vollständig sortenrein bzw. kavitätenrein, d.h. ausschließlich mit ersten Spritzgütern aus einer bestimmten Kavität und ausschließlich mit zweiten Spritzgütern aus einer bestimmten (auch anderen) Kavität befüllt werden können.

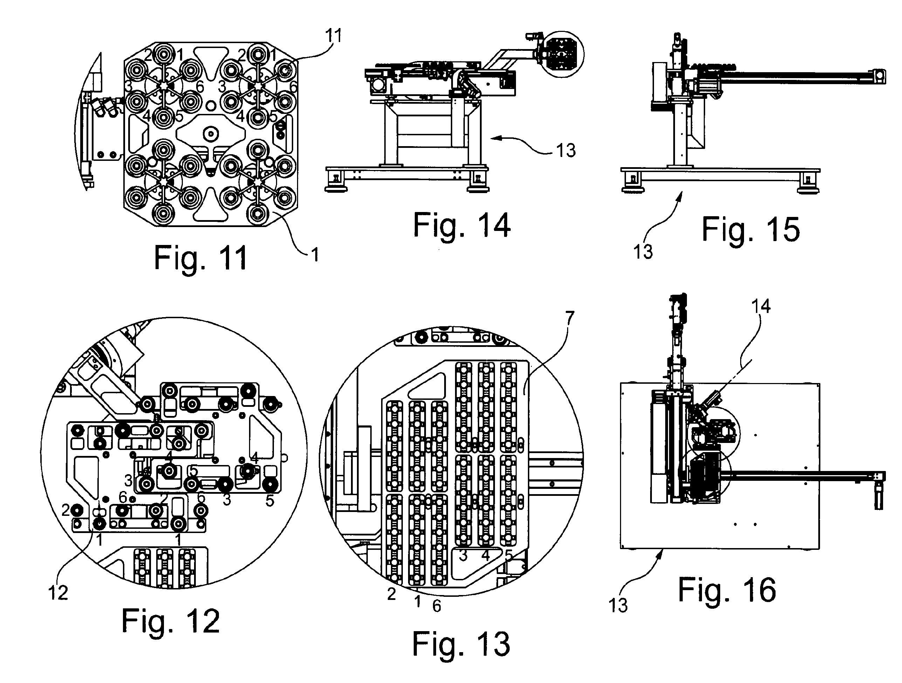

In Fig. 11 ist eine Entnahmeeinrichtung 1 gezeigt mit entsprechenden, kreisförmig angeordneten Aufnahmen 11 zur gleichzeitigen Übernahme von kreisförmig angeordneten Spritzgussteilen auf einer Spritzgussvorrichtung.

Fig. 12 zeigt einen Ausschnitt der Linearisiereinrichtung mit ihren relativ zueinander verstellbaren Aufnahmen 12, wobei mehrere Gruppen 10 von halbkreisförmig angeordneten Aufnahmen zur Übernahme von jeweils Teilen der ersten und zweiten Spritzgüter UT, OT vorgesehen sind.

Fig. 13 zeigt den entlang der Z-Achse verstellbaren Zwischenspeicher 7 mit seinen Aufnahmeplätzen für die unterschiedlichen kavitätenreinen Gruppen.

In Fig. 14 bis 16 sind unterschiedliche Ansichten der in Fig. 10 in einer Gesamtansicht dargestellten Vorrichtung 13 gezeigt. Aus Fig. 16 ergibt sich u.a. die schräge räumliche Anordnung der Schwenkachse 14 der Linearisiereinrichtung.

### Bezugszeichen

- 1: Entnahmeeinrichtung
- 2: Linearisiereinrichtung
- 3: erster Teil der ersten Spritzgussteile
- 4: erster Teil der zweiten Spritzgussteile
- 5: zweiter Teil der ersten Spritzgussteile
- 6: zweiter Teil der zweiten Spritzgussteile
- 7: Zwischenspeicher
- 8: Überführeinrichtung
- 9: Spritzgusspaare
- 10: Gruppe
- 11: Aufnahmen
- 12: Aufnahmen
- 13: Vorrichtung
- 14: Schwenkachse

- UT: erste Spritzgussteile
- OT: zweite Spritzgussteile

## Patentansprüche

1. Kombiniertes Spritzgüterentnahme- und Montageverfahren, insbesondere zur Entnahme von Kontaktlinsenteilformen und Montage von Kontaktlinsenformen aus jeweils der zwei Kontaktlinsenteilformen, mit den Schritten:
a: Entnahme von K ersten Spritzgussteilen (UT), insbesondere untere Kontaktlinsen-Teilformen, aus K kreisförmig angeordneten ersten Kavitäten und gleichzeitige Entnahme von K zweiten Spritzgussteilen (OT), insbesondere obere KontaktlinsenTeilformen, aus K kreisförmig angeordneten zweiten Kavitäten mit einer Entnahmeeinrichtung (1);
b: Gleichzeitige Übergabe von einem teilkreisförmig, insbesondere halbkreisförmig angeordneten ersten Teil (3), insbesondere einer ersten Hälfte, der K ersten Spritzgussteile (UT) und von einem teilkreisförmig, insbesondere halbkreisförmig, angeordneten ersten Teil (4), insbesondere einer ersten Hälfte der zweiten Spritzgussteile (OT) auf eine Linearisiereinrichtung (2), und Relativverstellen von Entnahmeeinrichtung (1) und Schwenkeinrichtung und danach gleichzeitige Übergabe von einem teilkreisförmig, insbesondere halbkreisförmig, angeordneten zweiten Teil (5), insbesondere einer zweiten Hälfte, der K ersten Spritzgussteile (UT) und von einem teilkreisförmig, insbesondere halbkreisförmig, angeordneten zweiten Teil (6), insbesondere einer zweiten Hälfte, der zweiten Spritzgussteile (OT) auf die Linearisiereinrichtung (2);
c: Relatiwerstellen der ersten und zweiten Spritzgussteile (UT, OT) auf der Linearisiereinrichtung (2), derart, dass der erste Teil (3) der K ersten Spritzgussteile (UT) und der erste Teil (4) der K zweiten Spritzgussteile (OT) und der zweite Teil (5) der K ersten Spritzgussteile (UT) und der zweite Teil (6) der K zweiten Spritzgussteile (OT) jeweils in einer Reihe angeordnet sind;
d: Gleichzeitiges Überführen des ersten und des zweiten Teils (3, 5) von ersten Spritzgussteilen (UT) auf einen Zwischenspeicher (7) und danach gleichzeitiges Überführen des ersten und der zweiten Teils (4, 6) der zweiten Spritzgussteile (OT) zu dem ersten und dem zweiten Teil (3, 5) der ersten Spritzgussteile (UT), insbesondere Aufsetzen auf diese, und dadurch bilden von Spritzgusspaaren (9), insbesondere Kontaktlinsenformen, jeweils umfassend ein erstes und ein zweites Spritzgussteil (UT, OT);
e: Mehrfache Wiederholung der Schritte a bis d, wobei Spritzgusspaare (9) so angeordnet werden, dass die jeweils aus derselben erste Kavität stammenden ersten Spritzgussteile (UT) unterschiedlicher Spritzgussvorgänge jeweils eine, bevorzugt als Reihe angeordnete, Gruppe (10) auf dem Zwischenspeicher (7) bilden, wobei jede Gruppe (10) jeweils auch zweite Spritzgussteile (OT) derselben zweiten Kavität umfasst.

2. Verfahren nach Anspruch 1,
**dadurch gekennzeichnet**,
dass Träger, insbesondere Transporttrays, mit Spritzgusspaaren (9) aus dem Zwischenspeicher (7) beladen werden.

3. Verfahren nach Anspruch 2,
**dadurch gekennzeichnet**,
dass die Schritte a bis d solange wiederholt werden, bis die Gruppen (10) jeweils eine Anzahl A von Spritzgusspaaren (9) umfassen, die der Anzahl von in den Träger zu füllenden Spritzgusspaaren (9) oder einem ganzzahligen Teiler von A entspricht.

4. Verfahren nach einem der Ansprüche 2 oder 3,
**dadurch gekennzeichnet**,
dass in jeden Träger ausschließlich Spritzgusspaare (9) einer einzigen der Gruppen (10) geladen werden oder dass in jedem Träger die gleiche Anzahl von Spritzgusspaaren (9) unterschiedlicher der Gruppen (10) geladen werden.

5. Verfahren nach einem der vorhergehenden Ansprüche,
**dadurch gekennzeichnet**,
dass die ersten und zweiten Spritzgussteile (UT, OT) mit der Linearisiereinrichtung (2) vor der Überführung auf den Zwischenspeicher (7), räumlich verschwenkt werden, insbesondere aus einer Vertikalanordnung in eine Horizontalanordnung.

6. Verfahren nach Anspruch 5,
**dadurch gekennzeichnet**,
dass das Verschwenken um zwei gedachte, rechtwinklig zueinander angeordnete Raumachsen durchgeführt wird, insbesondere in einem gemeinsamen Verschwenkvorgang um eine schräge Drehachse.

7. Verfahren nach einem der Ansprüche 1 bis 6,
**dadurch gekennzeichnet**,
dass das Überführen der Spritzgussteile (UT, OT) von der Linearisiereinrichtung (2) auf den Zwischenspeicher (9) mit einer Überführeinrichtung (8) durchgeführt wird, die in einer Parallelebene zur Flächenerstreckung des Zwischenspeichers (9) verfahren kann und vorzugsweise Hubmittel zur Realisierung unabhängiger Hübe für die ersten und zweiten Spritzgussteile (UT, OT) senkrecht zu der Parallelebene aufweist.

8. Vorrichtung zur kombinierten Spritzgüterentnahme und -montage, insbesondere zur Entnahme von Kontaktlinsenteilformen und Montage von Kontaktlinsenformen aus jeweils der zwei Kontaktlinsenteilformen, bevorzugt zur Durchführung eines Verfahrens nach einem der vorhergehenden Ansprüche, umfassend:
• Zur gleichzeitigen Entnahme von K ersten Spritzgussteilen (UT), insbesondere untere Kontaktlinsen-Teilformen, aus K kreisförmig angeordneten ersten Kavitäten und von K zweiten Spritzgussteilen (OT), insbesondere obere KontaktlinsenTeilformen, aus K kreisförmig angeordneten zweiten Kavitäten ausgebildete Entnahmeentnahmeeinrichtung (1)
• einen Zwischenspeicher (7),
• eine Steuereinrichtung,
• eine Linearisiereinrichtung (2),
• Verstellmittel zur Relativverstellen der Entnahmeeinrichtung (1) und der Linearisiereinrichtung (2),
• Überführmittel zum Überführen der Spritzgussteile (UT, OT) von der Linearisiereinrichtung (2) auf den Zwischenspeicher (7),
wobei die Linearisiereinrichtung (2), derart ausgebildet ist, dass auf diese in einem ersten Übergabeschritt gleichzeitig ein teilkreisförmig, insbesondere halbkreisförmig angeordneter ersten Teil (3), insbesondere eine erste Hälfte, der K ersten Spritzgussteile (UT) und ein teilkreisförmig, insbesondere halbkreisförmig, angeordneter erster Teil (4), insbesondere eine ersten Hälfte, der zweiten Spritzgussteile (OT) übergebbar ist, und auf die in einem zweiten Übergabeschritt nach einem Relativverstellen von Entnahmeeinrichtung (1) und Schwenkeinrichtung gleichzeitig ein teilkreisförmig, insbesondere halbkreisförmig, angeordneter zweiter Teil (5), insbesondere eine zweite Hälfte, der K ersten Spritzgussteile (UT) und ein teilkreisförmig, insbesondere halbkreisförmig, angeordneter zweiter Teil (6), insbesondere eine zweiten Hälfte, der zweiten Spritzgussteile (OT) übergebbar ist, und
wobei die Steuereinrichtung die Verstellmittel derart ansteuernd ausgebildet sind, dass die zwischen dem ersten und dem zweiten Übergabeschritte eine Relativverstellung der Linearisiereinrichtung (2) zu der Entnahmevorrichtung (1) erfolgt, insbesondere um eine Strecke A, und
wobei Linearisiereinrichtung (2) derart ausgebildet ist, dass die ersten und zweiten Spritzgussteile (UT, OT) auf der Linearisiereinrichtung (2) relativ zueinander verstellbar sind, derart, dass der erste Teil (3) der K ersten Spritzgussteile (UT) und der erste Teil (4) der K zweiten Spritzgussteile (OT) und der zweite Teil (5) der K ersten Spritzgussteile (UT) und der zweite Teil (6) der K zweiten Spritzgussteile (OT) jeweils in einer Reihe angeordnet sind, und
wobei die Überführmittel derart ausgebildet und von der Steuereinrichtung ansteuerbar sind, dass der ersten und der zweiten Teil (3, 5) von ersten Spritzgussteilen (UT) auf den Zwischenspeicher (7) überführbar sind und, dass nach dieser Überführung der erste und der zweite Teil (4, 6) der zweiten Spritzgussteile (OT) zu dem ersten und dem zweiten Teil (3, 5) der ersten Spritzgussteile (UT), insbesondere Aufsetzen auf diese, überführbar sind und dadurch Spritzgusspaare (9) bildbar sind, insbesondere Kontaktlinsenformen, jeweils umfassend ein ersten und ein zweites Spritzgussteil (UT, OT), und
wobei die Steuervorrichtung die Überführmittel derart ansteuernd ausgebildet ist, dass Spritzgusspaare (9) aus unterschiedlichen Spritzgussvorgängen so angeordnet werden, dass die jeweils aus derselben erste Kavität stammenden ersten Spritzgussteile (UT) unterschiedlicher Spritzgussvorgänge jeweils eine, bevorzugt als Reihe angeordnete, Gruppe (10) auf dem Zwischenspeicher (7) bilden, wobei jede Gruppe (10) jeweils auch zweite Spritzgussteile (OT) derselben zweiten Kavität umfasst.

9. Vorrichtung nach Anspruch 8,
**dadurch gekennzeichnet**,
dass die Überführmittel eine von dem Zwischenspeicher (7) und der Linearisiereinrichtung (2) separate Übergabevorrichtung umfassen, oder dass die Linearisiereinrichtung (2) Bestandteil der Überführmittel sind und die Spritzgussteile (UT, OT) unmittelbar von der Linearisiereinrichtung (2) auf den Zwischenspeicher (7) übergebbar sind.

10. Vorrichtung nach einem der vorhergehenden Ansprüche,
**dadurch gekennzeichnet**,
dass die Linearisiereinrichtung (2) teilkreisförmig angeordnete Aufnahmen (11, 12) für die Spritzgussteile (UT, OT) aufweist und dass zumindest ein Teil der Aufnahmen (11, 12), relativ zu mindestens einer anderen der Aufnahmen (11, 12) verstellbar ist, so dass die Aufnahmen (11, 12) aus den teilkreisförmigen Anordnungen in linienförmige Anordnungen überführbar sind.

11. Vorrichtung nach Anspruch 10,
**dadurch gekennzeichnet**,
dass die Linearisiereinrichtung (2) verschwenkbar angeordnet ist, insbesondere um eine winklig zur Horizontalen und winklig zur Vertikalen angeordnete Schwenkachse.

12. Vorrichtung nach einem der Ansprüche 9 bis 11,
**dadurch gekennzeichnet**,
dass der Zwischenspeicher (7) in einer Ebene, insbesondere in einer Horizontalebene, verfahrbar ist.

13. Vorrichtung nach einem der Ansprüche 9 bis 12,
**dadurch gekennzeichnet**,
dass die Überführmittel in einer Parallelebene zur Flächenerstreckung des Zwischenspeichers (7) verfahrbar sind und dass die Überführmittel separat voneinander ansteuerbare Hubmittel unabhängigen zum Verstellen der ersten und zweiten Spritzgussteile (UT, OT) senkrecht zu der Parallelebene aufweisen.

14. Um eine Schwenkachse (14) verschwenkbar angeordnete Linearisiervorrichtung (2), insbesondere zur Verwendung in einer Vorrichtung (13) nach einem der Ansprüche 8 bis 13,
umfassend teilkreisförmig angeordnete Aufnahmen (11, 12) zur Aufnahme von ersten und zweiten Spritzgussteilen (UT, OT) sowie Verstellmittel zum Relativverstellen der Aufnahmen (11, 12) zueinander derart, dass die Aufnahmen (11, 12) nach der Verstellung in Reihen nebeneinander angeordnet sind.

## Claims

1. A combined demoulding method and assembly method of injection moulded articles, in particular for demoulding the mould halves of contact lenses and assembly of the contact lens moulds consisting of respectively the two contact lens mould halves, with the steps:
a: demoulding of K first injection moulding parts (UT), in particular lower contact lens mould halves, from K circularly arranged first cavities and simultaneous demoulding of K second injection moulding parts (OT), in particular upper contact lens mould halves, from K circularly arranged second cavities with a demoulding device (1);
b: simultaneous transfer from a part-circularly, in particularly semi-circularly, arranged first part (3), in particular a first half, of the K first injection moulding parts (UT) and from a part-circularly, in particular semi-circularly, arranged first part (4), in particular a first half of the second injection moulding parts (OT) to a linearizing device (2), and relative adjusting of demoulding device (1) and pivoting device and thereafter simultaneous transfer from a part-circularly, in particular semi-circularly, arranged second part (5), in particular a second half, of the K first injection moulding parts (UT) and from a part-circularly, in particular semi-circularly, arranged second part (6), in particular a second half, of the second injection moulding parts (OT) to the linearizing device (2);
c: relative adjusting of the first and second injection moulding parts (UT, OT) on the linearizing device (2) such that the first part (3) of the K first injection moulding parts (UT) and the first part (4) of the K second injection moulding parts (OT) and the second part (5) of the K first injection moulding parts (UT) and the second part (6) of the K second injection moulding parts (OT) are respectively arranged in a row;
d: simultaneous transferring of the first and second part (3, 5) of first injection moulding parts (UT) to an intermediate store (7) and thereafter simultaneous transferring of the first and second part (4, 6) of the second injection moulding parts (OT) to the first and the second part (3, 5) of the first injection moulding parts (UT), in particular placing onto the latter, and thereby forming of injection moulding pairs (9), in particular contact lens moulds, respectively comprising a first and a second injection moulding part (UT, OT);
e: multiple repetition of steps a to d, wherein injection moulding pairs (9) are arranged so that the first injection moulding parts (UT), respectively originating from the same first cavity, of different injection moulding processes form respectively a group (10), preferably arranged as a row, on the intermediate store (7), wherein each group (10) respectively also comprises second injection moulding parts (OT) of the same second cavity.

2. The method according to Claim 1,
**characterized in that**
carriers, in particular transport trays, are loaded with injection moulding pairs (9) from the intermediate store (7).

3. The method according to Claim 2,
**characterized in that**
the steps a to d are repeated until the groups (10) comprise respectively a number A of injection moulding pairs (9) which corresponds to the number of injection moulding pairs (9) to be filled into the carrier or to a submultiple of A.

4. The method according to one of Claims 2 or 3,
**characterized in that**
exclusively injection moulding pairs (9) of a single one of the groups (10) are loaded into each carrier, or that in each carrier the same number of injection moulding pairs (9) of different ones of the groups (10) are loaded.

5. The method according to one of the preceding claims,
**characterized in that**
the first and second injection moulding parts (UT, OT) are pivoted three-dimensionally with the linearizing device (2) before the transfer to the intermediate store (7), in particular from a vertical arrangement into a horizontal arrangement.

6. The method according to Claim 5,
**characterized in that**
the pivoting is carried out about two imaginary spatial axes arranged at right angles to one another, in particular in a shared pivoting process about an oblique rotation axis.

7. The method according to one of Claims 1 to 6,
**characterized in that**
the transferring of the injection moulding parts (UT, OT) from the linearizing device (2) to the intermediate store (9) is carried out by a transfer device (8) which can move in a parallel plane to the surface extent of the intermediate store (9) and preferably has lifting means for realizing independent strokes for the first and second injection moulding parts (UT, OT) perpendicularly to the parallel plane.

8. A device for combined demoulding and assembly of injection moulded articles, in particular for demoulding the mould halves of contact lenses and assembly of the contact lens moulds consisting of respectively the two contact lens mould halves, preferably for carrying out a method according to one of the preceding claims, comprising:
▪ Demoulding device (1) constructed for the simultaneous demoulding of K first injection moulding parts (UT), in particular lower contact lens mould halves, from K circularly arranged first cavities and of K second injection moulding parts (OT), in particular upper contact lens mould halves, from K circularly arranged second cavities
▪ an intermediate store (7),
▪ a control device,
▪ a linearizing device (2),
▪ adjusting means for the relative adjusting of the demoulding device (1) and the linearizing device (2),
▪ transfer means for transferring the injection moulding parts (UT, OT) from the linearizing device (2) to the intermediate store (7),
wherein the linearizing device (2) is constructed such that in a first transfer step simultaneously a part-circularly, in particular semi-circularly arranged first part (3), in particular a first half, of the K first injection moulding parts (UT) and a part-circularly, in particular semi-circularly arranged first part (4), in particular a first half, of the second injection moulding parts (OT) is able to be transferred to it, and to which in a second transfer step after a relative adjusting of demoulding device (1) and pivoting device simultaneously a part-circularly, in particular semi-circularly arranged second part (5), in particular a second half, of the K first injection moulding parts (UT) and a part-circularly, in particular semi-circularly, arranged second part (6), in particular a second half, of the second injection moulding parts (OT) is able to be transferred, and
wherein the control device is constructed in a manner actuating the adjusting means such that between the first and the second transfer steps a relative adjusting of the linearizing device (2) to the demoulding device (1) takes place, in particular by a distance A, and
wherein the linearizing device (2) is constructed such that the first and second injection moulding parts (UT, OT) are adjustable relative to one another on the linearizing device (2) such that the first part (3) of the K first injection moulding parts (UT) and the first part (4) of the K second injection moulding parts (OT) and the second part (5) of the K first injection moulding parts (UT) and the second part (6) of the K second injection moulding parts (OT) are respectively arranged in a row, and
wherein the transfer means are constructed and actuatable by the control device such that the first and the first and the second part (3, 5) of first injection moulding parts (UT) are able to be transferred to the intermediate store (7) and that after this transfer, the first and the second part (4, 6) of the second injection moulding parts (OT) are able to be transferred to the first and the second part (3, 5) of the first injection moulding parts (UT), in particular placing thereon, and thereby injection moulding pairs (9) are able to be formed, in particular contact lens moulds, respectively comprising a first and a second injection moulding part (UT, OT), and
wherein the control device is constructed in a manner actuating the transfer means such that injection moulding pairs (9) from different injection moulding processes are arranged so that the first injection moulding parts (UT) of different injection moulding processes, originating respectively from the same first cavity, form respectively a group (10), preferably arranged as a row, on the intermediate store (7), wherein each group (10) also comprises respectively second injection moulding parts (OT) of the same second cavity.

9. The device according to Claim 8,
**characterized in that**
the transfer means comprise a transfer device separate from the intermediate store (7) and the linearizing device (2), or that the linearizing device (2) is a component of the transfer means, and the injection moulding parts (UT, OT) are able to be transferred directly from the linearizing device (2) to the intermediate store (7).

10. The device according to one of the preceding claims,
**characterized in that**
the linearizing device (2) has part-circularly arranged mounts (11, 12) for the injection moulding parts (UT, OT) and that at least a portion of the mounts (11, 12) is adjustable relative to at least another of the mounts (11, 12), so that the mounts (11, 12) are able to be transferred from the part-circular arrangements into linear arrangements.

11. The device according to Claim 10,
**characterized in that**
the linearizing device (2) is arranged so as to be pivotable, in particular about a pivot axis arranged angled to the horizontal and angled to the vertical.

12. The device according to one of Claims 9 to 11,
**characterized in that**
the intermediate store (7) is movable in a plane, in particular in a horizontal plane.

13. The device according to one of Claims 9 to 12,
**characterized in that**
the transfer means are movable in a parallel plane to the surface extent of the intermediate store (7) and that the transfer means have lifting means, actuatable separately from one another, independently for adjusting the first and second injection moulding parts (UT, OT) perpendicularly to the parallel plane.

14. A linearizing device (2), arranged pivotably about a pivot axis (14), in particular for use in a device (13) according to one of Claims 8 to 13,
comprising part-circularly arranged mounts (11, 12) to receive first and second injection moulding parts (UT, OT), and adjusting means for the relative adjusting of the mounts (11, 12) to one another, such that after the adjustment the mounts (11, 12) are arranged in rows adjacent to one another.

## Revendications

1. Procédé de prélèvement et d'assemblage combinés d'articles produits par injection, en particulier de prélèvement de formes partielles de lentilles de contact et d'assemblage de formes de lentilles de contact à partir des deux formes partielles de lentilles de contact respectives, comprenant les étapes :
a : prélèvement de K premières pièces moulées par injection (UT), en particulier de formes partielles inférieures de lentilles de contact, à partir de K premières cavités disposées en forme de cercle et prélèvement simultané de K deuxièmes pièces moulées par injection (OT), en particulier de formes partielles supérieures de lentilles de contact, à partir de K deuxièmes cavités disposées en forme de cercle avec un dispositif de prélèvement (1) ;
b : transfert simultané d'une première partie (3) disposée en forme de cercle partiel, en particulier en forme de demi-cercle, en particulier d'une première moitié des K premières pièces moulées par injection (UT) et d'une première partie (4) disposée en forme de cercle partiel, en particulier en forme de demi-cercle, en particulier d'une première moitié des deuxièmes pièces moulées par injection (OT) à un dispositif de linéarisation (2), et déplacement relatif du dispositif de prélèvement (1) et d'un dispositif de pivotement et ensuite transfert simultané d'une deuxième partie (5) disposée en forme de cercle partiel, en particulier en forme de demi-cercle, en particulier d'une deuxième moitié des K premières pièces moulées par injection (UT) et d'une deuxième partie (6) disposée en forme de cercle partiel, en particulier en forme de demi-cercle, en particulier d'une deuxième moitié des deuxièmes pièces moulées par injection (OT) au dispositif de linéarisation (2) ;
c : déplacement relatif des premières et deuxièmes pièces moulées par injection (UT, OT) sur le dispositif de linéarisation (2), de telle sorte que la première partie (3) des K premières pièces moulées par injection (UT) et la première partie (4) des K deuxièmes pièces moulées par injection (OT) et la deuxième partie (5) des K premières pièces moulées par injection (UT) et la deuxième partie (6) des K deuxièmes pièces moulées par injection (OT) soient respectivement disposées en une rangée ;
d : passage simultané de la première et de la deuxième partie (3, 5) de premières pièces moulées par injection (UT) à un dispositif de stockage temporaire (7) et ensuite passage simultané de la première et de la deuxième partie (4, 6) des deuxièmes pièces moulées par injection (OT) à la première et à la deuxième partie (3, 5) des premières pièces moulées par injection (UT), en particulier placement sur celles-ci, et formation ainsi de paires de pièces moulées par injection (9), en particulier de formes de lentilles de contact, comportant respectivement une première et une deuxième pièce moulée par injection (UT, OT) ;
e : répétition plusieurs fois des étapes a à d, les paires de pièces moulées par injection (9) étant disposées de telle sorte que les premières pièces moulées par injection (UT) respectives, provenant de la même première cavité, de différentes opérations de moulage par injection forment respectivement un groupe (10), disposé de préférence sous forme de rangée, sur le dispositif de stockage temporaire (7), chaque groupe (10) comportant respectivement aussi des deuxièmes pièces moulées par injection (OT) de la même deuxième cavité.

2. Procédé selon la revendication 1, **caractérisé en ce que** des supports, en particulier des plateaux de transport, sont chargés de paires de pièces moulées par injection (9) provenant du dispositif de stockage temporaire (7).

3. Procédé selon la revendication 2, **caractérisé en ce que** les étapes a à d sont répétées jusqu'à ce que les groupes (10) comportent respectivement un nombre A de paires de pièces moulées par injection (9), lequel correspond au nombre de paires de pièces moulées par injection (9) à introduire dans le support ou à un dénominateur entier de A.

4. Procédé selon l'une quelconque des revendications 2 et 3, **caractérisée en ce que**, dans chaque support, des paires de pièces moulées par injection (9) d'un seul des groupes (10) sont exclusivement chargées, ou **en ce que**, dans chaque support, le même nombre de paires de pièces moulées par injection (9) de groupes différents parmi les groupes (10) sont chargées.

5. Procédé selon l'une quelconque des revendications précédentes, **caractérisée en ce qu'**avant le passage au dispositif de stockage temporaire (7), les premières et deuxièmes pièces moulées par injection (UT, OT) sont pivotées spatialement à l'aide du dispositif de linéarisation (2), en particulier d'un agencement vertical à un agencement horizontal.

6. Procédé selon la revendication 5, **caractérisée en ce que** le pivotement est effectué autour de deux axes spatiaux imaginaires disposés perpendiculairement l'un à l'autre, en particulier lors d'une opération de pivotement commune autour d'un axe de rotation incliné.

7. Procédé selon l'une quelconque des revendications 1 à 5, **caractérisée en ce que** le passage des pièces moulées par injection (UT, OT) du dispositif de linéarisation (2) au dispositif de stockage temporaire (9) est effectué à l'aide d'un dispositif de transfert (8) qui peut se déplacer dans un plan parallèle à l'étendue superficielle du dispositif de stockage temporaire (9) et comprend de préférence des moyens de levage pour réaliser des levages indépendants pour les premières et deuxièmes pièces moulées par injection (UT, OT) perpendiculairement au plan parallèle.

8. Dispositif de prélèvement et d'assemblage combinés d'articles produits par injection, en particulier de prélèvement de formes partielles de lentilles de contact et d'assemblage de formes de lentilles de contact à partir des deux formes partielles de lentilles de contact respectives, de préférence pour mettre en oeuvre un procédé selon l'une quelconque des revendications précédentes, comportant :
- un dispositif de prélèvement (1) réalisé pour le prélèvement simultané de K premières pièces moulées par injection (UT), en particulier de formes partielles inférieures de lentilles de contact, à partir de K premières cavités disposées en forme de cercle et de K deuxièmes pièces moulées par injection (OT), en particulier de formes partielles supérieures de lentilles de contact, à partir de K deuxièmes cavités disposées en forme de cercle,
- un dispositif de stockage temporaire (7),
- un dispositif de commande,
- un dispositif de linéarisation (2),
- des moyens de déplacement pour le déplacement relatif du dispositif de prélèvement (1) et du dispositif de linéarisation (2),
- des moyens de passage pour le passage des pièces moulées par injection (UT, OT) du dispositif de linéarisation (2) au dispositif de stockage temporaire (7), le dispositif de linéarisation (2) étant réalisé de telle sorte que, lors d'une première étape de transfert, une première partie (3) disposée en forme de cercle partiel, en particulier en forme de demi-cercle, en particulier une première moitié des K premières pièces moulées par injection (UT) et une première partie (4) disposée en forme de cercle partiel, en particulier en forme de demi-cercle, en particulier une première moitié des deuxièmes pièces moulées par injection (OT) puissent être transférées simultanément à ce dispositif de linéarisation et que, lors d'une deuxième étape de transfert, après un déplacement relatif du dispositif de prélèvement (1) et du dispositif de pivotement, une deuxième partie (5) disposée en forme de cercle partiel, en particulier en forme de demi-cercle, en particulier une deuxième moitié des K premières pièces moulées par injection (UT) et une deuxième partie (6) disposée en forme de cercle partiel, en particulier en forme de demi-cercle, en particulier une deuxième moitié des deuxièmes pièces moulées par injection (OT) puissent être transférées simultanément à ce dispositif de linéarisation, et le dispositif de commande étant réalisé de manière à commander les moyens de déplacement de telle sorte qu'entre la première et la deuxième étape de transfert un déplacement relatif du dispositif de linéarisation (2) par rapport au dispositif de prélèvement (1) ait lieu, en particulier d'une distance A, et le dispositif de linéarisation (2) étant réalisé de telle sorte que les premières et deuxièmes pièces moulées par injection (UT, OT) sur le dispositif de linéarisation (2) puissent être déplacées relativement les unes par rapport aux autres, de telle sorte que la première partie (3) des K premières pièces moulées par injection (UT) et la première partie (4) des K deuxièmes pièces moulées par injection (OT) et la deuxième partie (5) des K premières pièces moulées par injection (UT) et la deuxième partie (6) des K deuxièmes pièces moulées par injection (OT) soient respectivement disposées en une rangée, et les moyens de transfert étant réalisés et pouvant être commandés par le dispositif de commande de telle sorte que l'on puisse faire passer la première et la deuxième partie (3, 5) de premières pièces moulées par injection (UT) à un dispositif de stockage temporaire (7) et qu'après ce transfert, on puisse faire passer la première et la deuxième partie (4, 6) des deuxièmes pièces moulées par injection (OT) à la première et à la deuxième partie (3, 5) des premières pièces moulées par injection (UT), en particulier les placer sur celles-ci, et des paires de pièces moulées par injection (9) pouvant ainsi être formées, en particulier de formes de lentilles de contact, comportant respectivement une première et une deuxième pièce moulée par injection (UT, OT), et le dispositif de commande étant réalisé de manière à commander les moyens de transfert de telle sorte que des paires de pièces moulées par injection (9) de différentes opérations de moulage par injection soient disposées de telle sorte que les premières pièces moulées par injection (UT), provenant respectivement de la même première cavité, de différentes opérations de moulage par injection forment respectivement un groupe (10), disposé de préférence sous forme de rangée, sur le dispositif de stockage temporaire (7), chaque groupe (10) comportant respectivement aussi des deuxièmes pièces moulées par injection (OT) de la même deuxième cavité.

9. Dispositif selon la revendication 8, **caractérisée en ce que** les moyens de transfert comportent un dispositif de transfert séparé du dispositif de stockage temporaire (7) et du dispositif de linéarisation (2), ou **en ce que** le dispositif de linéarisation (2) fait partie des moyens de passage et les pièces moulées par injection (UT, OT) peuvent être transférées directement du dispositif de linéarisation (2) au dispositif de stockage temporaire (7).

10. Dispositif selon l'une quelconque des revendications précédentes, **caractérisée en ce que** le dispositif de linéarisation (2) comprend des logements (11, 12), disposés en forme de cercle partiel, pour les pièces moulées par injection (UT, OT), et **en ce qu'**au moins une partie des logements (11, 12) peut être déplacée relativement par rapport à au moins un autre parmi les logements (11, 12), de telle sorte que les logements (11, 12) puissent passer des agencements en forme de cercle partiel à des agencements en forme de ligne.

11. Dispositif selon la revendication 10, **caractérisée en ce que** le dispositif de linéarisation (2) est disposé de manière pivotante, en particulier autour d'un axe de pivotement disposé angulairement par rapport à l'horizontale et angulairement par rapport à la verticale.

12. Dispositif selon l'une quelconque des revendications 9 à 11, **caractérisée en ce que** le dispositif de stockage temporaire (7) peut être déplacé dans un plan, en particulier dans un plan horizontal.

13. Dispositif selon l'une quelconque des revendications 9 à 12, **caractérisée en ce que** les moyens de transfert sont déplaçables dans un plan parallèle à l'étendue superficielle du dispositif de stockage temporaire (7) et **en ce que** les moyens de transfert comprennent des moyens de levage pouvant être commandés séparément les uns des autres et indépendants pour le déplacement des premières et deuxièmes pièces moulées par injection (UT, OT) perpendiculairement au plan parallèle.

14. Dispositif de linéarisation (2) disposée de manière pivotante autour d'un axe de pivotement (14), en particulier destiné à être utilisé dans un dispositif (13) selon l'une quelconque des revendications 8 à 13, comportant des logements (11, 12) disposés en forme de cercle partiel pour recevoir des premières et deuxièmes pièces moulées par injection (UT, OT) ainsi que des moyens de déplacement pour le déplacement relatif des logements (11, 12) les uns par rapport aux autres, de telle sorte que les logements (11, 12) soient, après le déplacement, disposés de manière juxtaposée en rangées.
